# EUROPÄISCHE PATENTSCHRIFT

(11) **EP 1 440 558 B1**
(45) Veröffentlichungstag und Bekanntmachung des Hinweises auf die Patenterteilung: **12.12.2007**
(21) Anmeldenummer: 02774457.2
(22) Anmeldetag: 15.10.2002
(51) Int. Cl.: H04M 3/42, H04M 3/46, H04Q 3/62, H04Q 3/00

(54) **VERFAHREN UND VORRICHTUNG ZUR BILDUNG VON GRUPPEN AUS TEILNEHMERN EINES KOMMUNIKATIONSNETZES**
METHOD AND DEVICE FOR FORMING GROUPS FROM SUBSCRIBERS TO A COMMUNICATION NETWORK
PROCEDE ET DISPOSITIF POUR FORMER DES GROUPES D'ABONNES DANS UN RESEAU DE COMMUNICATION

(30) Priorität: 31.10.2001 DE 10153255
(43) Veröffentlichungstag der Anmeldung: 28.07.2004
(73) Patentinhaber: SIEMENS AKTIENGESELLSCHAFT, 80333 München (DE)
(72) Erfinder: NEUHAUS, Ralf, 44534 Lünen (DE)
(86) Internationale Anmeldenummer: PCT/DE2002/003900
(87) Internationale Veröffentlichungsnummer: WO 2003/041375

(56) Entgegenhaltungen:
- US-A- 5 920 619
- "SIMPLIFIED INTERFACE FOR PABX CONFIGURATION" IBM TECHNICAL DISCLOSURE BULLETIN, IBM CORP. NEW YORK, US, Bd. 35, Nr. 2, 1. Juli 1992 (1992-07-01), Seiten 474-478, XP000313365 ISSN: 0018-8689
- HARIPRIYA S. ET AL: 'Dynamic Groups for LDAPV3' IETF STANDARD-WORKING-DRAFT Oktober 2001, INTERNET ENGINEERING TASK FORCE, IETF, CH, XP015014084 ISSN: 0000-0004

## Beschreibung

Die Erfindung betrifft ein Verfahren und eine Vorrichtung zur Bildung von Gruppen aus Teilnehmern eines Kommunikationsnetzes gemäß dem Oberbegriff des Anspruchs 1 bzw. 16.

Moderne aus Kommunikationssystemen aufgebaute Kommunikationsnetze umfassen zentrale oder verteilte Datenbanken, in denen die an den Kommunikationsnetzen angeschlossenen Teilnehmer verzeichnet sind. Die Datenbanken enthalten für jeden Teilnehmer einen Datensatz, in dem die teilnehmer-individuellen Informationen in Feldern, also an speziellen Positionen des Datensatzes, abgelegt sind. Die Felder kann man auch als Elemente der Datensätze bezeichnen.

In Telekommunikationssystemen, oft auch als Telekommunikationsanlagen bezeichnet, umfassen diese Informationen neben der Angabe des physikalischen Anschlußorgans, der sogenannten Lage, zumindest die Rufnummer des Teilnehmers. Daneben sind regelmäßig auch weitere Kennzeichen enthalten, beispielsweise der Name des Teilnehmers, seine Abteilungsbezeichnung, Angaben über seine Berechtigung zu Amts- und Auslandsgesprächen und ähnliches. Dabei sind die Teilnehmer in Telekommunikationsnetzen, die aus mindestens einem Telekommunikationssystem gebildet sind, oftmals Gruppen zugeordnet. Jeder Teilnehmer kann Mitglied einer oder auch mehrerer Gruppen sein. Ein bekanntes Beispiel ist die Anrufübernahmegruppe, bei der eingehende Rufe, die vom gerufenen Teilnehmer innerhalb einer vorbestimmten Zeit nicht entgegengenommen werden, von den anderen Mitgliedern dieser Gruppe angenommen werden können. Ein ähnliches Beispiel ist das Leistungsmerkmal Gruppenruf, bei dem einer Arbeitsgruppe zusätzlich eine Gruppenrufnummer zugewiesen wird, bei deren Anwahl der. Ruf an alle Apparate der Gruppenmitglieder geleitet wird und so von jedem Gruppenmitglied angenommen werden kann. Auch die Teilnehmer einer Chef-Sekretär-Beziehung, bei der auch die für den Chef eingehenden Anrufe am Sekretärapparat signalisiert werden, stellen eine kleine Gruppe dar. Schließlich ist auch die sogenannte geschlossene Benutzergruppe, bei der nur Gespräche innerhalb dieser Gruppe vermittelt werden können, eine Gruppe im vorgenannten. Sinne.

Die Zugehörigkeit zu einer oder mehreren Gruppen wird in den Telekommunikationssystemen, an denen die Teilnehmer angeschlossen sind, eingestellt. Dies wird üblicherweise auch in den Datensätzen vermerkt.

Die Druckschrift US-A-5920619 "Regional Centrex" zeigt ein als "Regional Centrex" bezeichnetes Verfahren, bei dem geschlossene Benutzergruppen in einem öffentlichen Kommunikationsnetz mit mehreren Kommunikationsanlagen und über die Grenzen einer einzelnen Kommunikationsanlage hinweg gebildet werden. Dazu wird in jeder der dem Verfahren angeschlossenen Kommunikationsanlagen eine Datenbank ("Centrex File") geführt, in der alle diejenigen lokalen Benutzer aufgelistet sind, für die das Centrex-Verfahren gelten soll und die an der jeweiligen betroffenen lokalen Kommunikationsanlage angemeldet sind. Die jeweiligen lokalen Datenbanken der einzelnen Kommunikationsanlagen werden von einem zentralen Standort aus mit Hilfe von Kommandos ("Operation and Maintenance Command") verwaltet. Dabei sind verschiedene Kommandos für die Erstellung eines Datensatzes, das Löschen eines Datensatzes, das Erstellen einer Gruppe, das Entfernen einer Gruppe etc. vorgesehen.

Besonderheiten weist die Gruppenzugehörigkeit in Kommunikationssystemen auf, die als E-Mail-Systeme zum Austausch elektronischer Post ausgeführt sind. Bei den E-Mail-Systemen können gleichfalls in einer Datenbank Datensätze mit den Kennzeichen über die Teilnehmer abgelegt sein. Auch diese Datensätze haben dann verschiedene Felder, von denen mindestens eines die E-Mail-Adresse des Teilnehmers enthält. Weitere Felder der Datensätze können beispielsweise den Namen des Teilnehmers, eine Organisationseinheit, eine Standort- oder Gebäudeinformation, die Telefon- und Telefaxnummer und ähnliches enthalten. Auch in den E-Mail-Systemen können Teilnehmer zu Gruppen zusammengefasst sein. Ein bekanntes Beispiel dafür sind die sogenannten Verteilerlisten, wobei beim Versand einer Nachricht als Adressat der Name einer Liste angegeben wird und jeder in dieser Liste verzeichnete Teilnehmer eine Kopie dieser Nachricht erhält. Die Zugehörigkeit eines Teilnehmers zu einer solchen Liste kann in dem Datensatz verzeichnet sein. Oder aber es kann auch eine separate Liste vorhanden sein, in der die mit dieser Liste zu adressierenden Teilnehmer verzeichnet sind. Die Gruppenzugehörigkeit bei E-Mail-Systemen muß somit nicht unbedingt in den Datensätzen vermerkt sein, sondern wird häufig in einer separaten Liste abgelegt, in der alle mit dieser Liste zu adressierenden Teilnehmer verzeichnet sind.

In Kommunikationssystemen und Kommunikationsnetzen, insbesondere solchen mit einer großen und/order sich zeitlich häufig ändernden Teilnehmerzahl, hat es sich als nachteilig erwiesen, daß die Gruppierung von Teilnehmern mit einem hohen Aufwand verbunden ist, der regelmäßig manuell geleistet werden muss. In Kommunikationsnetzen, die aus mehreren Kommunikationssystemen bestehen, müssen häufig zur Erstellung oder Änderung von Gruppenbeziehungen viele Datensätze oder Listen in oftmals mehreren Datenbanken verändert werden.

Die Aufgabe der Erfindung besteht darin, ein Verfahren und eine Vorrichtung vorzuschlagen, mit dem die Einrichtung und Pflege von Gruppierungen in Kommunikationssystemen und Kommunikationsnetzen vereinfacht wird.

Die Lösung dieser Aufgabe ist bezogen auf das Verfahren durch die im Anspruch 1 und bezogen auf die Vorrichtung auf die im Anspruch 15 angegebenen Merkmale gegeben. Durch die kennzeichnenden Merkmale der Unteransprüche ist das Verfahren in vorteilhafter Weise weiter ausgestaltet.

Die Lösung sieht bezogen auf das Verfahren und die Vorrichtung vor, dass ausgewählte Felder der Datensätze mittels eines Dienstes selbsttätig auf gleiche Kennzeichen hin geprüft werden und jeweils die Teilnehmer, die in den ausgewählten Feldern gleiche Kennzeichen aufweisen, selbsttätig zu einer Gruppe zusammengefasst werden und dass bei der Änderung eines Datensatzes die Zuordnung des zugehörigen Teilnehmers zu einer oder mehreren Gruppen selbsttätig neu geprüft wird und gegebenenfalls eine Neuzuordnung erfolgt.

Insbesondere wenn das Kommunikationsnetz aus mehreren Kommunikationssystemen mit einer großen Teilnehmerzahl gebildet ist, können stets aktuelle Gruppen gebildet werden.

Der Zugriff auf die Datensätze einzelner Teilnehmer vereinfacht sich, wenn die Datensätze in einer Datenbank gespeichert sind:

Die manuelle Änderung von Datensätzen kann entfallen, wenn die Zugehörigkeit von Teilnehmern zu Gruppen selbsttätig in der Datenbank aktualisiert wird.

Die Administrierung von Telekommunikationsnetzen vereinfacht sich, wenn bei der Änderung eines Datensatzes die Zuordnung des zugehörigen Teilnehmers zu einer oder mehreren Gruppen selbsttätig neu geprüft wird und gegebenenfalls eine Neuzuordnung erfolgt.

Wenn die Datensätze zumindest beim erstmaligen Anmelden der Teilnehmer erstellt werden, erübrigt sich eine manuelle Datenpflege bei einer neuerlichen oder weiteren Gruppierung der Teilnehmer.

Aus Gründen der Kostenkontrolle und der Informationssicherheit ist es vorteilhaft, wenn die Teilnehmer, die zu einer Gruppe zusammengefaßt sind, eine geschlossene Benutzergruppe bilden.

Vergebliche Versuche bei der Kontaktierung von Teilnehmern können vermieden werden, indem Teilnehmer, die temporär nicht erreichbar sind, für diese Zeit selbsttätig aus der Gruppe oder den Gruppen entfernt und nach Wiederkehren der Erreichbarkeit selbsttätig wieder zu der Gruppe oder den Gruppen hinzugefügt werden.

Die Adressierung von Gruppen anstelle einzelner Teilnehmer ist besonders dann effektiv, wenn die Teilnehmer, die zu einer Gruppe zusammengefaßt sind, zumindest ein gemeinsames Kennzeichen in zumindest einem Feld der zugeordneten Datensätze aufweisen.

Der Aufwand für die Einrichtung eines neuen Teilnehmers in einem Kommunikationsnetz verringert sich, wenn bei der Anmeldung des Teilnehmers am Kommunikationsnetz zur Erstellung des zugeordneten Datensatzes die Kennzeichen für einzelne oder alle Felder des Datensatzes aus einer zentralen Datenbank abgerufen und in den Feldern abgelegt werden, und die Zuordnung des Teilnehmers zu Gruppen anhand dieser Kennzeichen selbsttätig erfolgt.

Wenn das Kommunikationsnetz ein paketvermitteltes Netzwerk (IP-Netz; IP = Internet-Protokoll) ist oder wenn zumindest zum Austausch von Daten ein solches Netzwerk verwendet wird, ist der Zugriff auf die Datensätze der Datenbank oder den Datenbanken mit Hilfe gebräuchlicher Datenverarbeitungsanlagen einfach zu realisieren.

Die telefonische Erreichbarkeit von Arbeitsgruppen wird verbessert, wenn das Kommunikationsnetz ein Telekommunikationsnetz ist und die Gruppe oder die Gruppen zumindest als Anrufübernahmegruppe oder zur Realisierung eines Gruppenrufes verwendet werden können.

Das Versenden von E-Mails an eine große Teilnehmerzahl ist einfach zu bewerkstelligen, wenn das Kommunikationsnetz ein Netz zum Austausch elektronischer Post ist und die Gruppe oder die Gruppen zumindest als Verteilerliste für elektronische Post verwendet werden.

Ein Ausführungsbeispiel der Erfindung wird nachfolgend anhand der Zeichnung beschrieben. Dabei zeigen:
Fig. 1 die Gruppenbildung in einem Telekommunikationsnetz,
Fig. 2 die Gruppenbildung in einem E-Mail-System zum Austausch elektronischer Post, und
Fig. 3 die Anmeldung eines Teilnehmers mit Hilfe einer Smart-Card und die Datenpflege in einem Kommunikationsnetz mit bereits konfigurierten Gruppen.

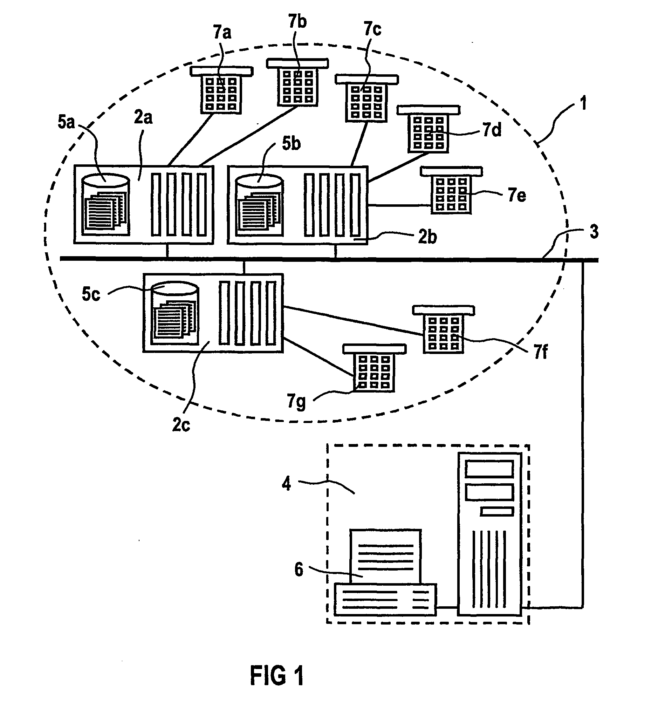

Das in Fig. 1 schematisch dargestellte Telekommunikationsnetz 1 besteht aus mehreren Telekommunikationssystemen 2a, 2b, 2c als Netzknoten mit daran angeschlossenen Teilnehmern 7a-7g. Die Telekommunikationssysteme 2a, 2b, 2c sind über ein paketvermitteltes Netz (IP-Netz) 3 mit einem zentralen Rechner 4 verbunden. Anwendungen, die auf dem zentralen Rechner 4 installiert sind, haben zur Administration über das paketvermittelte Netz 3 Zugriff auf die Telekommunikationssysteme 2a, 2b, 2c. Zu den Funktionen der Administration gehören der Zugriff auf die teilnehmerindividuellen Daten bzw. Datensätze, die in den Datenbanken 5a, 5b, 5c der Telekommunikationssysteme 2a, 2b, 2c gespeichert sind, sowie das Einrichten und Ändern von Gruppenbeziehungen zwischen den einzelnen Teilnehmern 7a-7g.

Auf dem zentralen Rechner 4 ist ein Dienst 6 installiert, der von dieser zentralen Stelle aus die Teilnehmer 7a-7g jeweils zu einer Anrufübernahmegruppe zusammenfasst , die den gleichen Abteilungen in einem Unternehmen angehören. Dabei ist Voraussetzung für das selbsttätige Ablaufen der Gruppierung, daß die teilnehmerindividuellen Daten, die in den Datenbanken 5a, 5b, 5c der Telekommunikationssysteme 2a, 2b, 2c abgespeichert sind, ein Feld oder Element mit der Abteilungsbezeichnung des jeweiligen Teilnehmers 7a-7g enthalten.

Zur Gruppierung der Teilnehmer 7a-7g baut der Dienst 6 in einem ersten Schritt eine Verbindung über das IP-Netz 3 zu jedem der Telekommunikationssysteme 2a, 2b, 2c auf, und fragt aus jeder Datenbank 5a, 5b, 5c jedes Telekommunikationssystems 2a, 2b, 2c die Liste mit den teilnehmerindividuellen Datensätzen aller Teilnehmer 7a-7g ab. Aus diesen Datensätzen wertet der zentrale Dienst 6 das Feld mit den Abteilungsbezeichnungen aus, erstellt daraus eine Auflistung aller Abteilungen und bietet diese einem Dienstbenutzer zur Auswahl an. Der Dienstbenutzer wählt in einem zweiten Schritt aus dieser Liste diejenige Abteilung oder diejenigen Abteilungen aus, deren Teilnehmer 7a-7g jeweils zu einer Anrufübernahmegruppe zusammengefaßt werden sollen. In einem dritten Schritt baut der Dienst 6 wiederum über das IP-Netz 3 Verbindungen zu jedem der Telekommunikationssysteme 2a, 2b, 2c auf, an denen Teilnehmer 7a-7g angeschlossen sind, die zu Anrufübernahmegruppen zusammengeschlossen werden sollen. Der Dienst 6 ruft zur Konfiguration in den Telekommunikationssystemen 2a, 2b, 2c jeweils die Funktionen auf, die zur Einrichtung von Anrufübernahmegruppen verwendet werden. Es handelt sich dabei um die gleichen Funktionen, die auch von Programmen zur manuellen Konfiguration, den sogenannten Administrationstools, genutzt werden. Mit Hilfe dieser Funktionen richtet der Dienst 6 selbsttätig in den Telekommunikationssystemen 2a, 2b, 2c die gewünschten Anrufübernahmegruppen ein.

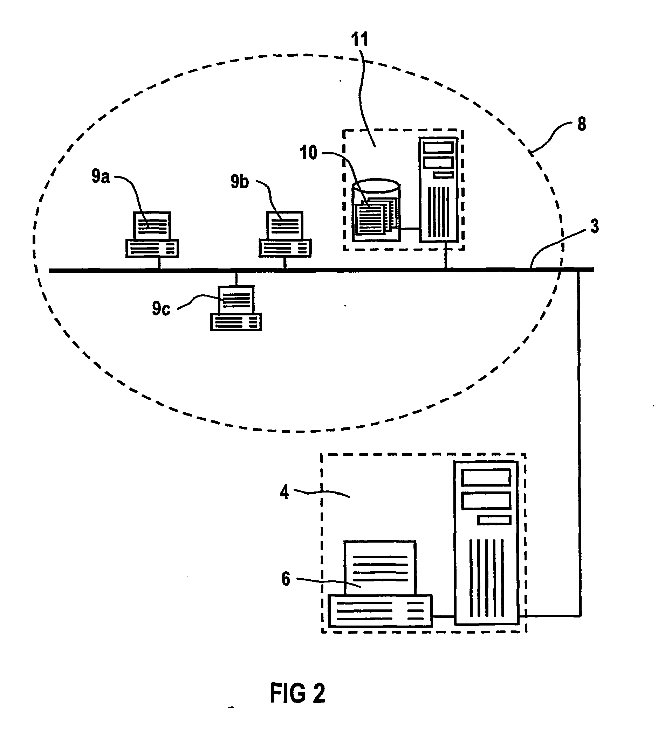

Analog zu dem für Telekommunikationsnetze beschriebenen Verfahren funktioniert das Verfahren, welches der Dienst 6 anwendet, um Benutzer 9a, 9b, 9c des in Fig. 2 dargestellten E-Mails-Systems 8 zu Gruppen zusammenzufassen. In diesem Fall wird als Gruppe ein Verteiler angelegt, mit dessen Hilfe auf einfache Weise alle Benutzer 9a, 9b, 9c, die in den Benutzerdatensätzen mit dem gleichen Standort verzeichnet sind, mit einer E-Mail benachrichtigt werden können.

Das E-Mail-System 8 verwendet eine zentrale Teilnehmerdatenbank 10, die auf einem zentralen Rechner, dem E-Mail-Server 11, gespeichert ist. Für jeden im E-Mail-System 8 registrierten Benutzer 9a, 9b, 9c ist in dieser Datenbank 10 ein Teilnehmerdatensatz vorhanden, in dem die teilnehmerindividuellen Datensätze gespeichert sind. Jeder Datensatz besteht aus mehreren Feldern, zu denen das Feld "Name", das Feld "E-Mail-Adresse", Felder mit Anschrift, Telefon- und Telefaxnummer sowie ein Feld mit der Bezeichnung des Benutzerstandorts gehören. Zur Gruppierung greift der auf dem zentralen Rechner 4 installierte zentrale Dienst 6 über ein IP-Netz 3, an dem sowohl der zentrale Dienst 6 als auch der E-Mail-Server 11 angeschlossen sind, auf die zentrale Datenbank 10 des E-Mail-Systems 8 zu und fragt die Datensätze aller Benutzer 9a, 9b, 9c ab. Dem Dienstbenutzer des Dienstes 6 wird nun eine Liste mit den Bezeichnungen aller Felder angezeigt, die verwendet werden können, um Verteilerlisten zu erzeugen. Nach Auswahl eines entsprechenden Feldes, es sind auch Kombinationen aus verschiedenen Feldern möglich, erstellt der Dienst 6 nun eine Liste mit allen unterschiedlichen Standortbezeichnungen, die in der Gesamtheit aller Datensätze vorkommen. Aus dieser Liste wählt der Dienstbenutzer jetzt einen, mehrere oder auch alle Standorte aus, für die jeweils eine E-Mail-Verteilerliste erstellt werden soll. Jetzt erstellt der Dienst 6 die entsprechende Liste bzw. die entsprechenden Listen, wobei der Dienstbenutzer für jede Liste einen Listennamen vergeben kann. Selbstverständlich kann, insbesondere bei einer überschaubaren Anzahl von Standorten, vom Dienst 6 selbsttätig jeder Standort ausgewählt werden. Grundsätzlich sind bei der Nutzung des Dienstes 6 verschiedene Voreinstellungen möglich, nach denen der Dienst 6 entweder dem Dienstbenutzer alle bildbaren Gruppen zur Auswahl anbietet oder direkt ohne weitere Abfrage alle bildbaren Gruppen erstellt. Danach greift der Dienst 6 wiederum auf den E-Mail-Server 11 zu und generiert mit einem entsprechenden Administrations-Befehl im Adressverzeichnis der Datenbank 10 des E-Mail-Servers 11 neue Einträge mit den Listennamen der neuen Verteilerlisten. Mit Hilfe weiterer Kommandos ordnet der zentrale Dienst 6 diesen Listennamen die E-Mail-Adressen derjenigen Benutzer 9a, 9b, 9c zu, die mit Adressierung dieser Liste erreicht werden sollen.

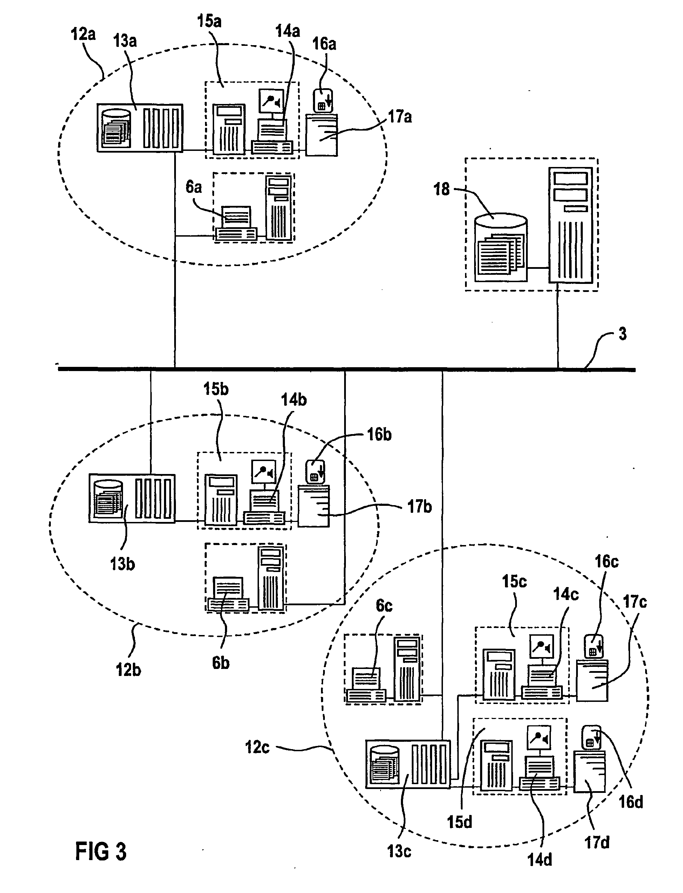

In dem in Fig. 3 dargestellten Telekommunikationsnetz mit verschiedenen Standorten 12a, 12b, 12c haben Benutzer die Möglichkeit, sich flexibel in den verschiedenen Standorten 12a, 12b, 12c an den dort jeweils vorhandenen Kommunikationssystemen 13a, 13b, 13c anzumelden. Zur Benutzung einer Telefonie-Anwendung 14a, 14b, 14c, 14d , die auf einem telefonietauglichen PC 15a, 15b, 15c, 15d installiert ist, wird eine Smart-Card 16a, 16b, 16c, 16d, also eine mit einem Mikrochip ausgestattete Karte, in ein Lesegerät 17a, 17b, 17c, 17d eingeführt, welches an dem entsprechenden PC 15a, 15b, 15c, 15d angeschlossen ist. Ein auf diesem PC 15a, 15b, 15c, 15d installiertes Anwendungsprogramm liest von der Smart-Card 16a, 16b, 16c, 16d die Benutzernummer des Benutzers aus, baut über ein IP-Netz 3 eine Verbindung zu einer zentral im Telekommunikationsnetz angeordneten Benutzer-Datenbank 18 auf, und liest aus dieser Benutzer-Datenbank 18 alle teilnehmer-individuellen Datensätze des Benutzers aus. Das Anwendungsprogramm verwendet diese teilnehmer-individuellen Datensätze, um den Benutzer als Teilnehmer am lokalen Kommunikationssystem anzumelden. Anschließend startet das Anwendungsprogramm den Dienst 6a, 6b, 6c, der für die Gruppenbildung der Teilnehmer am lokalen Kommunikationssystem, also am entsprechenden Standort, zuständig ist. Dabei werden dem Dienst 6a, 6b, 6c die teilnehmer-individuellen Datensätze des neu angemeldeten Teilnehmers mitgeteilt. Der Dienst 6a, 6b, 6c vergleicht nun die teilnehmerindividuellen Datensätze mit denjenigen Daten, die zur Definition bereits bestehender Gruppen, also beispielsweise Anrufübernahmegruppen oder E-Mail-Verteilerlisten, verwendet wurden. Diese Gruppen werden jetzt aktualisiert und, soweit sich Veränderungen ergeben, in allen betroffenen Kommunikationssystemen 13a, 13b, 13c neu administriert.

## Patentansprüche

1. Verfahren zur Bildung von Gruppen aus Teilnehmern (7a-7g) eines Kommunikationsnetzes anhand von den Teilnehmern (7a-7g) zugeordneten Datensätzen, die innerhalb des Kommunikationsnetzes zur Verfügung stehen und Kennzeichen der Teilnehmer (7a-7g) umfassen, wobei die Kennzeichen in Feldern der Datensätze abgelegt sind,
**dadurch gekennzeichnet,**
**dass** ausgewählte Felder der Datensätze mittels eines Dienstes (6) selbsttätig auf gleiche Kennzeichen hin geprüft werden und jeweils die Teilnehmer (7a-7g), die in den ausgewählten Feldern gleiche Kennzeichen aufweisen, selbsttätig zu einer Gruppe zusammengefasst werden, und
**dass** bei der Änderung eines Datensatzes die Zuordnung des zugehörigen Teilnehmers (7a-7g) zu einer oder mehreren Gruppen selbsttätig neu geprüft wird und gegebenenfalls eine Neuzuordnung erfolgt.

2. Verfahren nach Anspruch 1,
**dadurch gekennzeichnet, dass**
das Kommunikationsnetz (1) aus einem Kommunikationssystem (2a, 2b, 2c) oder mehreren Kommunikationssystemen (2a, 2b, 2c) gebildet ist.

3. Verfahren nach Anspruch 1 oder 2,
**dadurch gekennzeichnet, dass**
die Datensätze in einer Datenbank (5a, 5b, 5c) gespeichert sind.

4. Verfahren nach Anspruch 3,
**dadurch gekennzeichnet, dass**
die Zugehörigkeit von Teilnehmern (7a-7g) zu Gruppen selbsttätig in der Datenbank (5a, 5b, 5c) verzeichnet wird.

5. Verfahren nach einem der Ansprüche 1 bis 4,
**dadurch gekennzeichnet, dass**
die Datensätze zumindest beim erstmaligen Anmelden der Teilnehmer (7a-7g) erstellt werden.

6. Verfahren nach einem der Ansprüche 1 bis 5,
**dadurch gekennzeichnet, dass**
die Teilnehmer (7a-7g), die zu einer Gruppe zusammengefasst sind, eine geschlossene Benutzergruppe bilden können.

7. Verfahren nach einem der Ansprüche 1 bis 6,
**dadurch gekennzeichnet, dass**
Teilnehmer (7a-7g), die temporär nicht erreichbar sind, für diese Zeit selbsttätig aus der Gruppe oder den Gruppen entfernt und nach Wiederkehr der Erreichbarkeit selbsttätig wieder zu der Gruppe oder den Gruppen hinzugefügt werden.

8. Verfahren nach einem der Ansprüche 1 bis 7,
**dadurch gekennzeichnet, dass**
die Teilnehmer (7a-7g), die zu einer Gruppe zusammengefasst sind, zumindest ein gemeinsames Kennzeichen in zumindest einem Feld der zugeordneten Datensätze aufweisen.

9. Verfahren nach einem der Ansprüche 1 bis 8,
**dadurch gekennzeichnet, dass**
bei der Anmeldung eines Teilnehmers (7a-7g) an einem Kommunikationsnetz zur Erstellung des zugeordneten Datensatzes Kennzeichen für einzelne oder alle Felder des Datensatzes aus einer zentralen Datenbank (18) abgerufen und in den Feldern abgelegt werden und die Zuordnung des Teilnehmers (7a-7g) zu Gruppen anhand dieser Kennzeichen selbsttätig erfolgt.

10. Verfahren nach einem der Ansprüche 1 bis 9,
**dadurch gekennzeichnet, dass**
das Kommunikationsnetz ein paketvermitteltes Netzwerk, IP-Netz; IP = Internet Protokoll, (3) ist oder dass zumindest zum Austausch von Daten ein solches verwendet wird.

11. Verfahren nach einem der Ansprüche 1 bis 10,
**dadurch gekennzeichnet, dass**
das Kommunikationsnetz ein Telekommunikationsnetz (1) ist.

12. Verfahren nach Anspruch 11,
**dadurch gekennzeichnet, dass**
die Gruppe oder die Gruppen zumindest als Anrufübernahmegruppe oder zur Realisierung eines Gruppenrufes verwendet werden können.

13. Verfahren nach einem der Ansprüche 1 bis 10,
**dadurch gekennzeichnet, dass**
das Kommunikationsnetz ein Netz zum Austausch elektronischer Post ist.

14. Verfahren nach Anspruch 13,
**dadurch gekennzeichnet, dass**
die Gruppe oder die Gruppen zumindest als Verteilerliste für elektronische Post verwendet werden können.

15. Vorrichtung zur Bildung von Gruppen aus Teilnehmern (7a-7g) in einem Kommunikationsnetz anhand von den Teilnehmern (7a-7g) zugeordneten Datensätzen, die innerhalb des Kommunikationsnetzes zur Verfügung stehen und Kennzeichen der Teilnehmer (7a-7g) umfassen, wobei die Kennzeichen in Feldern der Datensätze abgelegt sind, **gekennzeichnet durch**
einen Rechner mit einem installierten Dienst (6), der zur selbsttätigen Prüfung ausgewählter Felder der Datensätze auf gleiche Kennzeichen hin und zur selbsttätigen Zusammenfassung zu einer Gruppe jeweils derjenigen Teilnehmer (7a-7g) ausgebildet ist, die in den ausgewählten Feldern gleiche Kennzeichen aufweisen, wobei der Dienst (6) derart ausgestaltet ist, dass dieser bei der Änderung eines Datensatzes die Zuordnung des zugehörigen Teilnehmers (7a-7g) zu einer oder mehreren Gruppen selbsttätig neu prüft und gegebenenfalls eine Neuzuordnung durchführt.

## Claims

1. Method for forming groups of subscribers (7a-7g) in a communication network using data records which are associated with the subscribers (7a-7g), are available within the communication network and comprise identifiers for the subscribers (7a-7g), the identifiers being stored in fields in the data records,
**characterized**
**in that** selected fields in the data records are automatically checked for the same identifiers by means of a service (6), and the respective subscribers (7a-7g) who have the same identifiers in the selected fields are automatically combined to produce a group, and
**in that** when a data record is changed the association between the associated subscriber (7a-7g) and one or more groups is automatically rechecked and a fresh association is made if appropriate.

2. Method according to Claim 1,
**characterized in that**
the communication network (1) is formed from a communication system (2a, 2b, 2c) or a plurality of communication systems (2a, 2b, 2c).

3. Method according to Claim 1 or 2,
**characterized in that**
the data records are stored in a database (5a, 5b, 5c).

4. Method according to Claim 3,
**characterized in that**
the association between subscribers (7a-7g) and groups is automatically recorded in the database (5a, 5b, 5c).

5. Method according to one of Claims 1 to 4,
**characterized in that**
the data records are created at least when the subscribers (7a-7g) register for the first time.

6. Method according to one of Claims 1 to 5,
**characterized in that**
the subscribers (7a-7g) who have been combined to produce a group may form a closed user group.

7. Method according to one of Claims 1 to 6,
**characterized in that**
subscribers (7a-7g) who are temporarily unavailable are automatically removed from the group or groups for this time and are automatically added to the group or groups again when availability has returned.

8. Method according to one of Claims 1 to 7,
**characterized in that**
the subscribers (7a-7g) who have been combined to produce a group have at least one common identifier in at least one field in the associated data records.

9. Method according to one of Claims 1 to 8,
**characterized in that**
the registration of a subscriber (7a-7g) on a communication network for the purpose of creating the associated data record involves identifiers for individual or all fields in the data record being retrieved from a central database (18) and being stored in the fields, and the subscriber (7a-7g) being automatically associated with groups on the basis of these identifiers.

10. Method according to one of Claims 1 to 9,
**characterized in that**
the communication network is a packet-switched network (IP network; IP = Internet Protocol) (3) or **in that** such a network is used at least for the interchange of data.

11. Method according to one of Claims 1 to 10,
**characterized in that**
the communication network is a telecommunication network (1).

12. Method according to Claim 11,
**characterized in that**
the group or groups can be used at least as a call acceptance group or in order to implement a group call.

13. Method according to one of Claims 1 to 10,
**characterized in that**
the communication network is a network for interchanging electronic mail.

14. Method according to Claim 13,
**characterized in that**
the group or groups can be used at least as a distribution list for electronic mail.

15. Apparatus for forming groups of subscribers (7a-7g) in a communication network using data records which are associated with the subscribers (7a-7g), are available within the communication network and comprise identifiers for the subscribers (7a-7g), the identifiers being stored in fields in the data records,
**characterized by**
a computer having an installed service (6) which is designed for automatically checking selected fields in the data records for the same identifiers and for automatically combining, to produce a group, those respective subscribers (7a-7g) who have the same identifiers in the selected fields,
the service (6) being in a form such that when a data record is changed the service automatically rechecks the association between the associated subscriber (7a-7g) and one or more groups and makes a fresh association if appropriate.

## Revendications

1. Procédé pour la formation de groupes d'abonnés (7a à 7g) d'un réseau de communication à l'aide de blocs de données qui sont associés aux abonnés (7a à 7g), qui sont disponibles à l'intérieur du réseau de communication et qui comprennent des indicateurs des abonnés (7a à 7g), les indicateurs étant enregistrés dans des champs des blocs de données,
**caractérisé par le fait que**
des champs sélectionnés des blocs de données sont vérifiés automatiquement au moyen d'un service (6) pour trouver des indicateurs identiques et, à chaque fois, les abonnés (7a à 7g) qui ont des indicateurs identiques dans les champs sélectionnés sont automatiquement réunis dans un groupe, et
lors de la modification d'un bloc de données, l'association de l'abonné concerné (7a à 7g) à un ou plusieurs groupes est à nouveau automatiquement vérifiée et, le cas échéant, une nouvelle association est effectuée.

2. Procédé selon la revendication 1,
**caractérisé par le fait que** le réseau de communication (1) est formé d'un système de communication (2a, 2b, 2c) ou de plusieurs systèmes de communication (2a, 2b, 2c).

3. Procédé selon la revendication 1 ou 2,
**caractérisé par le fait que** les blocs de données sont mémorisés dans une base de données (5a, 5b, 5c).

4. Procédé selon la revendication 3,
**caractérisé par le fait que** l'appartenance d'abonnés (7a à 7g) à des groupes est répertoriée automatiquement dans la base de données (5a, 5b, 5c).

5. Procédé selon l'une des revendications 1 à 4,
**caractérisé par le fait que** les blocs de données sont créés au moins lors de la première connexion des abonnés (7a à 7g).

6. Procédé selon l'une des revendications 1 à 5,
**caractérisé par le fait que** les abonnés (7a à 7g) qui sont réunis en un groupe peuvent former un groupe d'utilisateurs fermé.

7. Procédé selon l'une des revendications 1 à 6,
**caractérisé par le fait que** des abonnés (7a à 7g) qui ne sont pas joignables temporairement sont automatiquement retirés du ou des groupes pendant ce temps et, lorsqu'ils sont à nouveau joignables, ils sont automatiquement réintégrés dans le ou les groupes.

8. Procédé selon l'une des revendications 1 à 7,
**caractérisé par le fait que** les abonnés (7a à 7g) qui sont réunis en un groupe comportent au moins un indicateur commun dans au moins un champ des blocs de données associés.

9. Procédé selon l'une des revendications 1 à 8,
**caractérisé par le fait que**, lors de la connexion d'un abonné (7a à 7g) à un réseau de communication et en vue de la création du bloc de données associé, des indicateurs pour certains champs ou pour tous les champs du bloc de données sont demandés à une base de données centrale (18) et sont enregistrés dans les champs et l'association de l'abonné (7a à 7g) à des groupes s'effectue automatiquement à l'aide de ces indicateurs.

10. Procédé selon l'une des revendications 1 à 9,
**caractérisé par le fait que** le réseau de communication est un réseau à commutation de paquets, réseau IP, IP = Internet Protocol, (3) ou qu'un réseau de ce type est utilisé au moins pour l'échange de données.

11. Procédé selon l'une des revendications 1 à 10,
**caractérisé par le fait que** le réseau de communication est un réseau de télécommunications (1).

12. Procédé selon la revendication 11,
**caractérisé par le fait que** le ou les groupes peuvent être utilisés au moins comme groupe d'acceptation d'appel ou pour la réalisation d'un appel de groupe.

13. Procédé selon l'une des revendications 1 à 10,
**caractérisé par le fait que** le réseau de communication est un réseau pour l'échange de courriers électroniques.

14. Procédé selon la revendication 13,
**caractérisé par le fait que** le ou les groupes peuvent être utilisés au moins comme liste de distribution pour le courrier électronique.

15. Dispositif pour la formation de groupes d'abonnés (7a à 7g) dans un réseau de communication à l'aide de blocs de données qui sont associés aux abonnés (7a à 7g), qui sont disponibles à l'intérieur du réseau de communication et qui comprennent des indicateurs des abonnés (7a à 7g), les indicateurs étant enregistrés dans des champs des blocs de données,
**caractérisé par** un ordinateur avec un service installé (6) qui est conçu pour la vérification automatique de champs sélectionnés des blocs de données pour trouver des indicateurs identiques et pour la réunion automatique en un groupe à chaque fois de ceux des abonnés (7a à 7g) qui ont des indicateurs identiques dans les champs sélectionnés, le service (6) étant conçu de telle sorte que, lors de la modification d'un bloc de données, il vérifie à nouveau automatiquement l'association de l'abonné concerné (7a à 7g) à un ou plusieurs groupes et, le cas échéant, il effectue une nouvelle association.
